## Europäisches Patentamt
## European Patent Office
## Office européen des brevets

(11) Publication number: **0 287 787 B1**

# EUROPEAN PATENT SPECIFICATION

(45) Date of publication of patent specification: **11.12.91**

(21) Application number: **88103293.2**

(22) Date of filing: **01.05.84**

(51) Int. Cl.⁵: **A01N 43/653**, //(A01N43/653, 33:12)

(60) Publication number of the earlier application in accordance with Art.76 EPC: **0 127 944**

The file contains technical information submitted after the application was filed and not included in this specification

(54) **A plant growth regulating composition.**

(30) Priority: **02.05.83 JP 77817/83**

(43) Date of publication of application:
**26.10.88 Bulletin 88/43**

(45) Publication of the grant of the patent:
**11.12.91 Bulletin 91/50**

(84) Designated Contracting States:
**BE CH DE FR GB IT LI NL**

(56) References cited:
**EP-A- 0 054 431**
**EP-A- 0 057 357**
**GB-A- 2 046 260**
**GB-A- 2 081 700**

(73) Proprietor: **SUMITOMO CHEMICAL COMPANY, LIMITED**
**Kitahama 4-chome 5-33**
**Chuo-ku Osaka 541(JP)**

(72) Inventor: **Izumi, Kazuo**
**14-7, Mefu-2-chome**
**Takarazuka-shi(JP)**
Inventor: **Oshio, Hiromichi**
**14-12, Tokiwadai-6-chome**
**Toyonocho Toyono-gun Osaka-fu(JP)**

(74) Representative: **Goldin, Douglas Michael et al**
**J.A. KEMP & CO. 14, South Square Gray's Inn**
**London WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## EP 0 287 787 B1

### Description

The present invention relates to a composition for regulating the growth of plants which comprises as active ingredients (E)-1-(4-chlorophenyl)-4,4-dimethyl-2-(1,2,4-triazol-1-yl)-1-pentene-3-ol (hereinafter referred to as compound A) and (2-chloroethyl)trimethylammonium chloride (hereinafter referred to as chlormequat-chloride), and an inert carrier.

In the management of crop cultivation, lodging of crops by wind and rain is a serious problem, and the yield of crops markedly lowers by the lodging.

Previously, the present inventors extensively studied on plant growth regulating agents to reduce this lodging, and as a result, found that the compound A will reduce the lodging of crops to a large extent by controlling crops' height (GB 2046260B). By the subsequent further extensive study, the present inventors found that, when the compositions of the present invention containing as active ingredients the compound A and chlormequat-chloride is used as a plant growth regulating agent, a height controlling activity synergistically increases as compared with a single use of these compounds.

Chlormequat-chloride is already in use as a lodging-preventing agent for wheat (refer to W.T. Thomson : Agricultural Chemicals III, pp. 51-52)

The mixing ratio the compound A to chlormequat-chloride, these compounds, being the active ingredients of the compositions of the present invention, may be changed over a relatively wide range, but generally, it is 1 to 0.1-200, preferably 1 to 0.5-40 by part by weight.

The compositions of the present invention can be used in preventing the lodging of cereals (e.g. rice plant, wheat, barley, rye) and crops (e.g. soybean, cotton) and controlling the height thereof. Also, they can be used in regulating the growth of turfs and the succulent shoots of fruit trees, dwarfing ornamental plants for the purpose of increasing the commercial value, regulating the growth of hedges and regulating a flowering stage.

In the practical use of the compositions of the present invention, they are generally formulated into preparation forms such as emulsifiable concentrates, wettable powders, liquid formulations, suspension concentrates and granules by mixing with an inert carrier such as solid or liquid carrier, surface active agent or other auxiliaries. These compositions contain as active ingredients the compound A and chlormequat-chloride in an amount of 0.05 to 95%, preferably 0.1 to 80% by weight.

The solid carrier includes for example fine powders or granules of kaolin clay, attapulgite clay, bentonite, fuller's earth pyrophyllite, talc, diatomaceous earth, calcite, walnut powder, urea, ammonium sulfate and synthetic hydrated silicon dioxide. The liquid carrier includes for example aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton seed oil), dimethyl sulfoxide, acetonitrile and water.

The surface active agent used for for instance emulsification dispersion and wetting include for example anionic surface active agents such as salts of alkyl sulfate, alkyl(aryl)sulfonates, dialkyl sulfosuccinates and salts of polyoxyethylene alkylaryl ether phosphoric acid esters and nonionic ones such as polyoxyethylene alkyl ether, polyoxyethylene alkylaryl ether, polyoxyethylene polyoxypropylene block copolymers, sorbitan fatty acid esters and polyoxyethylene sorbitan fatty acid ester. The auxiliaries include for example lignosulfonates, alginates, polyvinyl alcohol, gum arabic, CMC (carboxymethyl cellulose) and PAP (isopropyl acid phosphate).

Preparation examples for the composition of the present invention will be shown. In the examples, all parts are by weight.

### Preparation example 1

10 Parts of the compound A, 10 parts of chlormequat-chloride, 3 parts of calcium lignosulfonate, 2 parts of sodium lauryl sulfate and 75 parts of synthetic hydrated silicon dioxide are thoroughly pulverized and mixed together to obtain a wettable powder.

### Preparation example 2

10 Parts of the compound A, 20 parts of chlormequat-chloride, 14 parts of polyoxyethylene styrylphenyl ether, 6 parts of calcium dodecylbenzenesulfonate and 50 parts of xylene are thoroughly mixed together to obtain an emulsifiable concentrate.

### Preparation example 3

2

EP 0 287 787 B1

5 Parts of the compound A, 10 parts of chlormequat-chloride, 1 part of synthetic hydrated silicon dioxide, 2 parts of calcium lignosulfonate, 30 parts of bentonite and 52 parts of kaolin clay are thoroughly pulverized and mixed together, well kneaded with water, granulated and then dried to obtain a granule.

These compositions, either as such or in dilution with for instance water are used in foliar treatment or soil treatment. In the case of soil treatment, they are sprayed onto the soil surface (as the need arises, they are mixed with the soil after spraying), or the soil is drenched with them. Also, an increase in their activity can be expected by using them in mixtures with other plant growth regulating agents. Further, they may also be used in mixtures with other agents such as insecticides, acaricides, nematocides, fungicides, herbicides, fertilizers and soil improvers.

The dosage rate of the active ingredient in the compositions of the present invention varies with weather conditions, soil conditions, preparation forms, the mixing ratio of active ingredient, the kind of intended crops and the like. Generally, however, the total amount of the compound A and chlormequat-chloride is 0.05 to 50 g, preferably 0.1 to 20 g per are. Compositions such as emulsifiable concentrates, wettable powders, liquid formulations and suspension concentrates are applied in dilution with water of 1 to 40 liters per are (if necessary, auxilaries for spraying such as a spreading agent may previously be added to the water), whilst compositions such as granules are applied as they are without dilution.

The spreading agent includes for example, in addition to the foregoing surface active agents, polyoxyethylene resin acids (ester), lignosulfonates, abietates, dinaphthylmethanedisulfonates and paraffins.

The plant growth regulating activity of the compositions of the present invention will be illustrated specifically with reference to the following test examples.

Test example Height controlling test for wheat

Sandy loam was filled in 500-ml plastic pots, and wheat was sowed at a rate of five seeds per pot and cultivated in a glass room. At the point when the wheat grew to the two-leaf stage after 14 days, the wettable powder obtained according to Preparation example 1 was diluted with water to the prescribed concentration of the active ingredient and foliar-applied at a rate of 5 ml per pot. After the application, the wheat plants were cultivated for further two weeks, and their height was measured. The test was carried out using two pots per plot. The result is shown in Table 1. The values in the table are the average height value of ten wheat plants expressed by index (%) with the value in the untreated plot as 100.

Table 1

|  | Concentration of the active ingredient (ppm) | Compound A | | | |
| --- | --- | --- | --- | --- | --- |
|  |  | 20 | 15 | 5 | 0 |
| Chlormequatchloride | 4000 | 72 | 78 | 82 | 87 |
|  | 2000 | 78 | 82 | 85 | 94 |
|  | 1000 | 80 | 89 | 90 | 97 |
| - | 0 | 90 | 95 | 98 | 100 |

**Claims**

1. A composition for regulating the growth of plants which comprises as active ingredients an effective amount of (E)-1-(4-chlorophenyl)-4,4-dimethyl-2-(1,2,4-triazol-1-yl)-1-pentene-3-ol and (2-chloroethyl)-trimethylammonium chloride, and an inert carrier.

2. The composition according to claim 1 comprising 0.1 to 200 parts by weight of (2-chloroethyl)-trimethylammonium chloride based on one part by weight of (E)-1-(4-chlorophenyl)-4,4-dimethyl-2-(1,2,4-triazol-1-yl)-1-pentene-3-ol.

3. A method for regulating the growth of plants which comprises applying a regulatory effective amount of the composition according to claim 1 or claim 2 to the plants or their environment.

4. Use of a composition according to claim 1 or claim 2 for regulating the growth of plants.

3

**Revendications**

1. Composition de régulation de la croissance de plantes, qui comprend comme ingrédients actifs une quantité efficace de (E)-1-(4-chlorophényl)-4,4-diméthyl-2-(1,2,4-triazol-1-yl)-1-pentène-3-ol et de chlorure de (2-chloroéthyl)triméthylammonium, et un support inerte.

2. Composition selon la revendication 1, comprenant 0,1 à 200 parties en poids de chlorure de (2-chloroéthyl)triméthylammonium par partie en poids de (E)-1-(4-chlorophényl)-4,4-diméthyl-2-(1,2,4-triazol-1-yl)-1-pentène-3-ol.

3. Procédé de régulation de la croissance de plantes, qui consiste à appliquer aux plantes ou à leur environnement une quantité efficace en tant que régulateur de la composition selon la revendication 1 ou la revendication 2.

4. Utilisation d'une composition selon la revendication 1 ou la revendication 2 pour réguler la croissance de plantes.

**Patentansprüche**

1. Zusammensetzung zur Steuerung des Wachstums von Pflanzen, enthaltend als aktive Bestandteile eine wirksame Menge an (E)-1-(4-chlorphenyl)-4,4-dimethyl-2-(1,2,4-triazol-1-yl)-1-penten-3-ol und (2-Chlorethyl)-trimethylammoniumchlorid sowie einen inerten Träger.

2. Zusammensetzung nach Anspruch 1, enthaltend 0,1 bis 200 Gew.-Teile (2-Chlorethyl)-trimethylammoniumchlorid bezogen auf ein Gewichtsteil (E)-1-(4-chlorphenyl)-4,4-dimethyl-2-(1,2,4-triazol-1-yl)-1-penten-3-ol.

3. Verfahren zur Steuerung des Wachstums von Pflanzen, wobei man eine zur Steuerung wirksame Menge der Zusammensetzung nach Anspruch 1 oder 2 bei den Pflanzen oder auf ihre Umgebung anwendet.

4. Verwendung einer Zusammensetzung nach Anspruch 1 oder 2 zur Steuerung des Wachstums von Pflanzen.